# EUROPEAN PATENT APPLICATION

(11) **EP 4 530 936 A1**
(43) Date of publication of application: **02.04.2025**
(21) Application number: 23200385.5
(22) Date of filing: 28.09.2023
(51) Int. Cl.: G06N 5/022

(54) **DYNAMIC KNOWLEDGE GRAPHS**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A computer system for dynamically updating a knowledge graph comprising a plurality of nodes interlinked by edges, an initial form of the knowledge graph being based on an initial data set, the system comprising:
an ingest layer configured to obtain further data; and
an update module configured to:
I-a. update the metadata associated with one or more of the plurality of nodes in the knowledge graph based on the further data, and/or
I-b. generate one or more further nodes based on the further data,;
then
II. generate an updated knowledge graph comprising an updated set of edges by forming and/or dissolving links between nodes in dependence on metadata associated with the nodes;

wherein the ingest layer and update module are configured to iteratively repeat respectively obtaining further data and performing steps I-a to II until a termination criterion is met.

## Description

### FIELD

The present disclosure relates to automated updating of knowledge graphs.

More specifically, aspects relate to computer systems for and computer-implemented methods of generating and updating dynamic knowledge graphs, computer-implemented methods of improving the security of computer networks, data processing systems configured to perform such methods, computer programs comprising instructions which, when the program is executed by a computer, cause the computer to carry out such methods, computer-readable data carriers having such programs stored thereon, and data carrier signals carrying such computer programs.

### BACKGROUND

Knowledge graphs are knowledge bases that use a graph-structured data model or topology. Knowledge graphs comprise nodes, representing entities, and edges interlinking nodes, representing semantic connections between those entities. Large knowledge graphs are sometimes referred to as enterprise knowledge graphs. Knowledge graphs can exist solely as databases or can also be rendered for display as mind maps on user interface devices. Applications of knowledge graphs include question answering, research storage, simulations, risk management, process monitoring, recommendation/prediction systems, and supply chain management.

Knowledge graphs can be built automatically, for example using deep learning and natural language processing (NLP) techniques. However, existing knowledge graph generation methods are resource intensive for the devices on which they are run, computationally demanding, and slow, with low scalability. They also result in static knowledge graphs. That is, they are fixed data structures so to be updated such knowledge graphs must be re-built from scratch, consuming significant resources each time including time, energy, processing power, and memory. They are therefore not well-suited to representing dynamic or 'live' data (e.g., relating to cybersecurity threats), to adaptation according to changing user requirements, or to collaborative knowledge base development.

What is needed is an efficient method of automatically updating knowledge graphs.

### SUMMARY

Aspects of the present disclosure are set out in the following clauses.
1. A computer system for generating and updating a dynamic knowledge graph, the system comprising:
   a data ingest layer configured to obtain a data set; and
   an agent module configured to:
      A. generate an initial plurality of nodes representative of the data set, each node having metadata associated therewith;
      B. associate an agent with each of the initial plurality of nodes, each such agent being configured to automatically establish one or more links between the node with which that agent is associated and one or more other nodes; and
      C. run the agents to generate an initial knowledge graph comprising
   the initial plurality of nodes interlinked by an initial set of edges;
   wherein:
   the data ingest layer is further configured to:
      D. obtain further data; and
   the agent module is further configured to:
      E.
         i. update the metadata associated with one or more of the initial plurality of nodes in the initial knowledge graph based on the further data, and/or
         ii. generate one or more further nodes based on the further data, each further node having metadata associated therewith, and associate an agent with each of the further nodes, each such agent being configured to automatically establish one or more links between the node with which that agent is associated and one or more other nodes; and
      F. subsequently run the agents to generate an updated knowledge graph comprising an updated set of edges dependent on the metadata associated with the nodes;
   wherein the system is configured to iteratively repeat steps D to F until a termination criterion is met.
2. A computer-implemented method of generating and updating a dynamic knowledge graph, the method comprising:
   i. obtaining a data set;
   ii. generating an initial plurality of nodes representative of the data set, each node having metadata associated therewith;
   iii. associating an agent with each of the initial plurality of nodes, each such agent being configured to automatically establish one or more links between the node with which that agent is associated and one or more other nodes;
   iv. running the agents to generate an initial knowledge graph comprising the initial plurality of nodes interlinked by an initial set of edges;
   v. obtaining further data;
   vi.
      a. updating the metadata associated with one or more of the initial plurality of nodes in the initial knowledge graph based on the further data, and/or
      b. generating one or more further nodes based on the further data, each further node having metadata associated therewith, and associating an agent with each of the further nodes, each such agent being configured to automatically establish one or more links between the node with which that agent is associated and one or more other nodes;
   vii. subsequently running the agents to generate an updated knowledge graph comprising an updated set of edges dependent on the metadata associated with the nodes; and
   viii. iteratively repeating steps v to vii until a termination criterion is met.
3. The computer-implemented method of clause 2, wherein step vii comprises one or more of the agents messaging one or more other of the agents to indicate a change in the metadata associated with the node with which it is associated.
4. The computer-implemented method of either of clauses 2 or 3, wherein a propensity of each agent to automatically establish a link with another agent in steps iv and vii depends on a configurable connection parameter.
4a. The computer-implemented method of clause 4, wherein the connection parameter's value depends on the metadata associated with the respective nodes terminating the link.
5. The computer-implemented method of any of clauses 2 to 4, wherein a propensity of each agent to automatically dissolve a link with another agent in step vii depends on a configurable decay parameter.
5a. The computer-implemented method of clause 5, wherein the decay parameter's value depends on the metadata associated with the respective nodes terminating the link.
6. The computer-implemented method of any of clauses 2 to 5a, further comprising introducing one or more additional catalytic agents configured to establish additional links between nodes and/or dissolve links between nodes in dependence on the metadata associated with those nodes.
7. The computer-implemented method of any of clauses 2 to 6, wherein step vii is performed such that a net number of edges formed exceeds a number of further nodes added in step vi.b.
8. The computer-implemented method of any of clauses 2 to 7, wherein each of the agents associated with the initial plurality of nodes is configured with an initial goal to randomly form a link between its associated node and another node.
9. The computer-implemented method of any of clauses 2 to 8, further comprising, in response to the termination criterion being met:
   ix. causing a user interface device to produce a user alert.
10. The computer-implemented method of any of clauses 2 to 9, wherein:
   step iv further comprises causing the initial knowledge graph to be displayed on a user interface device; and
   step vii further comprises causing the updated knowledge graph to be displayed on a user interface device.
11. A computer-implemented method of improving the security of a computer network comprising:
   performing the computer-implemented method of any of clauses 2 to 10, wherein the data set and the further data relate to threats to the computer network;
   predicting a future threat to the computer network based on the dynamic knowledge graph; and
   causing implementation of one or more security measures in the computer network to thwart the predicted future threat.
11a. The computer-implemented method of any of clauses 2 to 11, wherein steps ii, iv, vi.b and vii are performed in dependence on a configurable knowledge graph scale parameter which limits the total number of nodes which can be present in the initial knowledge graph and the updated knowledge graph.
11b. The computer-implemented method of any of clauses 2 to 11a, wherein the data set and further data both comprise text and steps ii and vi comprise generating nodes and associated metadata using natural language processing, `NLP', of that text.
11c. The computer-implemented method of any of clauses 2 to 11b, wherein steps ii and vi comprise generating nodes using vector embedding.
11d. The computer-implemented method of any of clauses 2 to 11c, wherein the agents are script-based.
11e. The computer-implemented method of any of clauses 2 to 11d wherein, in steps iv and vii, the agents run in interpreted mode.
11f. The computer-implemented method of any of clauses 2 to 11e wherein, in steps iv and vii, the agents are run in accordance with user input.
11g. The computer-implemented method of any of clauses 2 to 11f, performed by a distributed computing system comprising a plurality of computing devices, wherein, in steps iv and vii, one or more of the agents are run on one of the plurality of computing devices and one or more other of the agents are run on another of the plurality of computing devices.
12. A data processing system configured to perform the method of any of clauses 2 to 11g.
13. A computer program comprising instructions which, when the program is executed by a computer, cause the computer to carry out the method of any of clauses 2 to 11g.
14. A computer-readable data carrier having stored thereon the computer program of clause 13.
15. A data carrier signal carrying the computer program of clause 13.
16. A computer system for dynamically updating a knowledge graph comprising a plurality of nodes interlinked by edges, each of the plurality of nodes having metadata associated therewith, an initial form of the knowledge graph being based on an initial data set, the system comprising:
   an ingest layer configured to obtain further data; and
   an update module configured to:
      I-a. update the metadata associated with one or more of the plurality of nodes in the knowledge graph based on the further data, and/or
      I-b. generate one or more further nodes based on the further data, each further node having metadata associated therewith; then
      II. generate an updated knowledge graph comprising an updated set of edges by forming and/or dissolving links between nodes in dependence on the metadata associated with the nodes;
   wherein the ingest layer and update module are configured to iteratively repeat respectively obtaining further data and performing steps I-a to II until a termination criterion is met.
17. A computer-implemented method of dynamically updating a knowledge graph, the method comprising:
   i. obtaining an initial knowledge graph based on an initial data set, the initial knowledge graph comprising an initial plurality of nodes interlinked by an initial set of edges, each of the initial plurality of nodes having metadata associated therewith;
   ii. obtaining further data;
   iii.
      a. updating the metadata associated with one or more of the plurality of nodes in the knowledge graph based on the further data, and/or
      b. generating one or more further nodes based on the further data, each further node having metadata associated therewith;
   iv. subsequently generating an updated knowledge graph comprising an updated set of edges using a module configured to form and dissolve links between nodes in dependence on the metadata associated with the nodes; and
   viii. iteratively repeating steps ii to iv until a termination criterion is met.
18. The computer-implemented method of clause 17, wherein a propensity of the module to form links between nodes in step iv depends on a configurable connection parameter.
18a. The computer-implemented method of clause 18, wherein the connection parameter's value depends on the metadata associated with the respective nodes terminating the links.
19. The computer-implemented method of any of clauses 17 to 18a, wherein a propensity of the module to dissolve links between nodes in step iv depends on a configurable decay parameter.
19a. The computer-implemented method of clause 19, wherein the decay parameter's value depends on the metadata associated with the respective nodes terminating the links.
20. The computer-implemented method of any of clauses 17 to 19a, wherein step iv is performed such that a net number of edges formed exceeds a number of further nodes added in step iii.b.
21. The computer-implemented method of any of clauses 17 to 20, wherein the module of step iv is configured to form and dissolve links between nodes in dependence on pairwise matching of metadata.
22. The computer-implemented method of any of clauses 17 to 21, further comprising, in response to the termination criterion being met:
   ix. causing a user interface device to produce a user alert.
23. The computer-implemented method of any of clauses 17 to 22, wherein:
   step i further comprises causing the initial knowledge graph to be displayed on a user interface device; and
   step iv further comprises causing the updated knowledge graph to be displayed on a user interface device.
24. The computer-implemented method of any of clauses 17 to 23, wherein:
   step i further comprises associating an agent with each of the initial plurality of nodes, each such agent being configured to automatically establish one or more links between the node with which that agent is associated and one or more other nodes, the initial knowledge graph being obtained by running the agents;
   step iii.b. further comprises associating an agent with each of the further nodes, each such agent being configured to automatically establish one or more links between the node with which that agent is associated and one or more other nodes; and
   step iv is performed by running the agents.
25. The computer-implemented method of clause 24, wherein step iv comprises one or more of the agents messaging one or more other of the agents to indicate a change in the metadata associated with the node with which it is associated.
25a. The computer-implemented method of either of clauses 24 or 25, wherein the agents are script-based.
25b. The computer-implemented method of any of clauses 24 to 25a wherein, in step iv, the agents run in interpreted mode.
25c. The computer-implemented method of any of clauses 24 to 25b wherein, in step iv, the agents are run in accordance with user input.
25d. The computer-implemented method of any of clauses 24 to 25c, performed by a distributed computing system comprising a plurality of computing devices, wherein, in step iv, one or more of the agents are run on one of the plurality of computing devices and one or more other of the agents are run on another of the plurality of computing devices.
26. The computer-implemented method of any of clauses 17 to 25, further comprising introducing one or more catalytic agents configured to establish additional links between nodes and/or dissolve links between nodes in dependence on the metadata associated with those nodes.
27. A computer-implemented method of improving the security of a computer network comprising:
   performing the method of any of clauses 17 to 26, wherein the data set and the further data relate to threats to the computer network;
   predicting a future threat to the computer network based on the updated knowledge graph; and
   causing implementation of one or more security measures in the computer network to thwart the predicted future threat.
27a. The computer-implemented method of any of clauses 17 to 27, wherein steps i and iv are performed in dependence on a configurable knowledge graph scale parameter which limits the total number of nodes which can be present in the updated knowledge graph.
27b. The computer-implemented method of any of clauses 17 to 27a, wherein the initial data set and further data both comprise text and steps i and iv comprise generating nodes and associated metadata using natural language processing, `NLP', of that text.
27c. The computer-implemented method of any of clauses 17 to 27b, wherein steps i and iv comprise generating nodes using vector embedding.
28. A data processing system configured to perform the method of any of clauses 17 to 27c.
29. A computer program comprising instructions which, when the program is executed by a computer, cause the computer to carry out the method of any of clauses 17 to 27c.
30. A computer-readable data carrier having stored thereon the computer program of clause 29.
30a A data carrier signal carrying the computer program of clause 29.

### BRIEF DESCRIPTION OF THE FIGURES

Aspects of the present disclosure will now be described by way of example with reference to the accompanying figures. In the figures:
Figure 1 is a flowchart illustrating an example computer-implemented method of improving the security of a computer network;
Figure 2 illustrates an example architecture;
Figure 3 illustrates an example messaging mechanism;
Figure 4 is a flowchart illustrating an example computer-implemented method of updating a dynamic knowledge graph; and
Figure 5 schematically illustrates an example data processing system.

### DETAILED DESCRIPTION

It is proposed to make use of metadata associated with nodes of a knowledge graph in order to automatically update it. When new data becomes available which modifies or supplements that in the data set used to build an initial version of the knowledge graph, instead of a new graph being built from scratch the existing graph is updated by adding any new nodes as required, updating metadata associated with the nodes, and forming or dissolving links in dependence on that metadata. In this way, a dynamic self-updating knowledge graph is produced.

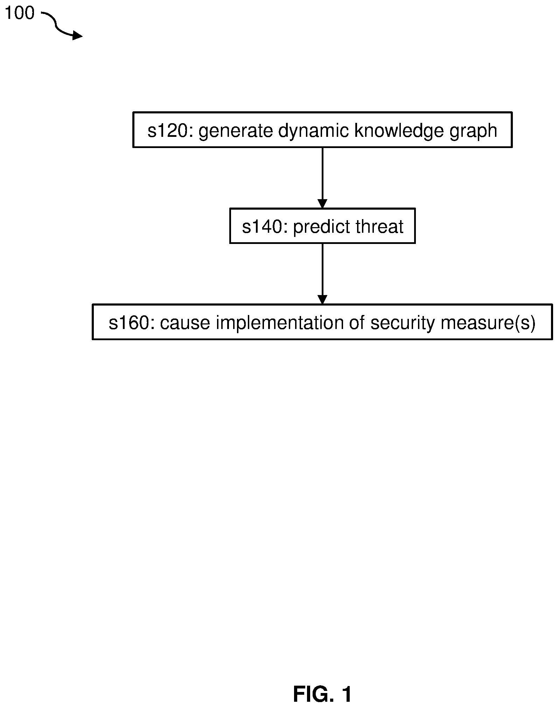

Once a dynamic knowledge graph has been constructed, value can be extracted from it, for example using tools such as Node2Vec and DeepWalk, in order to discover new information. For example, a dynamic knowledge graph representing a telecommunications network can be interrogated to predict which base stations are likely to be attacked by criminal groups in future, enabling pre-emptive security measures to be judiciously deployed. Similarly, a dynamic knowledge graph representing a computer network can be interrogated to predict how cybersecurity threats are likely to propagate within that network, enabling intelligent deployment of cybersecurity measures to prevent malware from spreading through the network and/or to prevent infection of critical devices. As another example, a dynamic knowledge graph can represent an unknown network, e.g. a network of threat actors, in which case building the graph amounts to building an approximation of which actors are in contact with one another. This can allow security services to simulate what might happen if a particular actor is caught, in order to target their operations efficiently. Figure 1 is a flowchart illustrating an example computer-implemented method 100 of improving the security of a computer network. At step 120, a dynamic knowledge graph is generated based on data relating to threats to the computer network. At step 140 a future threat to the computer network is predicted based on the dynamic knowledge graph. At step 160 implementation of one or more security measures is caused in the computer network to thwart the predicted future threat.

In some example implementations, agents are used to generate and update the knowledge graph. For example, each node in the graph can have an associated agent for forming and updating links with other nodes. The result is a reinforcement learning process running over a multi-agent graph structure. When new nodes are added new agents can be associated with them. Updating of the knowledge graph can comprise running the agents. In this way, the agents are iterated to produce a dynamic self-updating knowledge graph. Substantive processing is only required by new agents and those associated with nodes which are to be updated. The agents can be lightweight script-based agents to minimise resources required to generate and run them. Use of agents facilitates distribution of the required processing over multiple devices (e.g., servers), for example via cloud deployment, since different agents can be run on different machines. The resource consumption by individual machines in a distributed deployment is reduced versus the resource consumption which would be required of the machine implementing an equivalent centralised deployment. Accordingly, such distributed deployments lead to the potential for greater scalability since additional resource can easily be added by adding further devices to the deployment.

The knowledge graph can be generated and updated with reference to user input (for example specifying the connection, and/or decay parameters, and/or catalytic agents described below, and/or modifying one or more agent scripts). If a user wishes to change such input, then this can be done between loops of the iteration, instead of a new knowledge graph needing to be generated from scratch. Similarly, if multiple users wish to collaborate in developing a knowledge graph in real time, then they can each access a live version of the graph (and/or a rendering of it) and/or change user input to modify it.

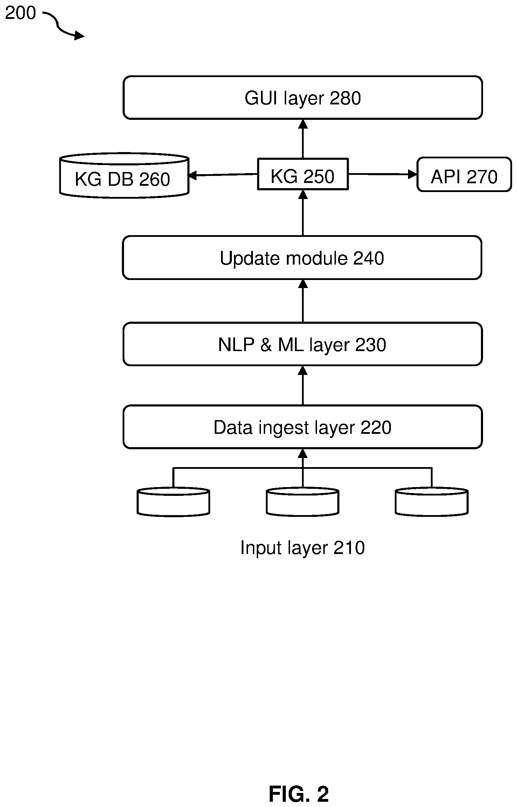

Figure 2 illustrates an example architecture 200 which could be used to implement the proposed methods.

One or more databases and/or data streams in an input layer 210 provide data to a data ingest layer 220. For example, support code could parse the input databases/data streams for new data periodically, or this could occur in response to user input. In one example, the input layer 210 could comprise subscription services, such as for cybersecurity threat reports (e.g. Darktrace^{™}).

Ingested data is then passed to an NLP and machine learning (ML) layer 230. The NLP & ML layer 230 creates an initial semantic data set and performs entity extraction (e.g., using tools such as SpaCy and vector embedding models such as Bidirectional Encoder Representations from Transformers, BERT). For example, the entities extracted could be cybersecurity threat actors. Each entity extracted is accompanied by metadata. In the threat actor example, the metadata could for example include type(s) of threat the actor has been known to propagate, criticality level of such threats, location such threats have been identified in, the time/date such threats have been identified, and any responses made to such threats.

An update module 240 is then populated in which each entity extracted from the input data (e.g., each threat actor) represents a node and has metadata associated with it. In some example implementations each node also has an agent associated with it. Any agents can for example be script-based to keep them computationally lightweight and readily modifiable. The update module 240 can for example be a working memory environment. Any agents can for example run in an interpreted mode (to reduce computational load), with the update module 240 containing the required machine learning and support code.

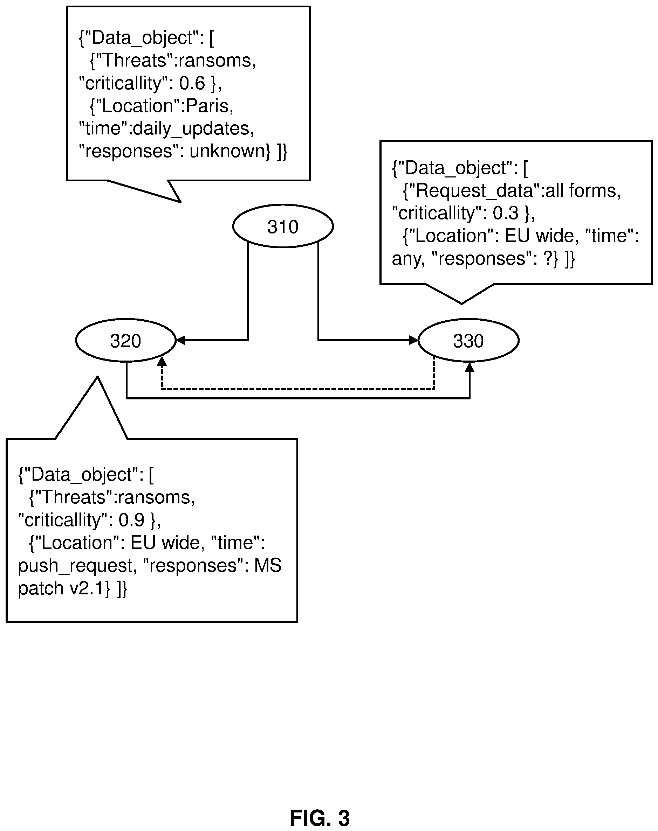

The update module 240 forms connections between nodes in dependence on their associated metadata, for example via pairwise matching. That is, a link between two nodes can be formed if an element of their metadata matches, suggesting the entities those nodes represent have something in common. For example, the nodes could represent two threat actors, both with location noted in their metadata as being EU. If agents are used, then the agents can be configured to automatically form connections with one another. On each iteration any new links suggested by newly ingested data are added. This can be occasioned in response to message exchanges between agents as described below in relation to Figure 3.

The update module 240 outputs a knowledge graph (KG) 250 comprising nodes representing the extracted entities, connected by edges. Its first form is an initial knowledge graph, generated based on an initial data set ingested from the input layer 210. It is subsequently updated to form an updated knowledge graph by the update module adding any new nodes, updating metadata of new and existing nodes, forming any new links suggested by the updated metadata, and dissolving any old links as appropriate to keep the knowledge graph up to date and focused. Updates can for example be done periodically, and/or in response to user input, and/or in response to new data becoming available at the input layer 210. If agents are used, then updating the knowledge graph can comprise iterating over the agents. All of the agents can be run on every iteration, or different agents can be configured to run with different frequencies to ensure an appropriate balance is struck between resource consumption and how up to date the knowledge graph is. The agents can be configured to initially form a connection at random, then on subsequent iterations to form connections based on their metadata, for example as described below in relation to Figure 3.

The knowledge graph 250 can be stored in a database (KG DB) 260. Alternatively or additionally, it can be rendered for display on a user interface device by a graphical user interface (GUI) layer 280. Alternatively or additionally, the knowledge graph can be provided for use by external applications e.g., via an application programming interface (API) 270.

The knowledge graph could optionally store edge strength values. For example, the more things two nodes have in common (according to their associated metadata), the stronger the edge (aggregate link) between them. E.g., two threat actors having only location in common would be connected by a single link, whereas if they had both location and attack type in common, they would be connected by a double link, making for a stronger edge.

An edge between two nodes could be formed in the knowledge graph in response to the formation of any links between them. Alternatively, a connection parameter could specify a minimum edge strength required to produce a new edge in the knowledge graph. In this way, there is a barrier to entry for new edges, reducing the chance of edges being formed as a result of coincidental (as opposed to meaningful) similarity between nodes. The connection parameter can optionally be configurable, by users and/or agents.

Edges in the knowledge graph can be dissolved from time to time. For example, updates to node metadata may indicate that pre-existing links are no longer present, thus corresponding edges should be dissolved for accuracy.

Nodes can also be removed from the knowledge graph if their metadata is not updated for an extended period, indicating they have become inactive and/or are no longer relevant to the topic of the knowledge graph. This could for example be a threshold period of time or threshold number of iterations. Such a threshold could be predetermined. Alternatively, the threshold could be determined on an ongoing basis from statistics performed on the knowledge graph, e.g. average node update frequency. In this way, what is considered an 'extended period' for a node's metadata to remain static is defined relative to what is normal for the graph.

Alternatively or additionally, nodes can be deleted if they become isolated (i.e. not connected by edges to any other nodes) or remain isolated for an extended period. This could for example be a threshold period of time or threshold number of iterations. Such a threshold could be predetermined. Alternatively, the threshold could be determined on an ongoing basis from statistics performed on the knowledge graph, e.g. average node isolation time. In this way, what is considered an 'extended period' for a node to remain isolated is defined relative to what is normal for the graph.

Instead of nodes being deleted if they become isolated, they could instead be reconnected into the graph via one or more random connections.

It can be preferable to limit the number of nodes and/or edges in the knowledge graph. This can avoid saturation, ensuring meaningful analysis of the knowledge graph can be performed. Alternatively or additionally, this can ensure that resources required to perform updates and store the knowledge graph are not over-extended.

A decay parameter can be used to govern dissolution of edges in the knowledge graph. For example, the aggregate strength of each edge can be determined on each iteration (e.g. as described above) and any edges weaker than a threshold defined by the decay parameter can be dissolved. Edge strength can optionally be determined in dependence on the age of the metadata on which an edge is based, for example so that newer data is weighted more heavily than older data in the determination of edge strength. In this case, operation of the decay parameter results in edges only persisting through iterations of the knowledge graph if they were either very strong to begin with, or new data reinforces them, keeping the knowledge graph current. Like the connection parameter, the decay parameter can optionally be configurable, by users and/or agents.

When the connection parameter and decay parameter are used together, they can be symmetrical, i.e. the threshold edge strength for new edge formation corresponds to the threshold edge strength for existing edge dissolution. Alternatively, the connection parameter could define a lower edge strength threshold than the decay parameter, resulting in growth of the number of edges, or vice-versa. The relative values of the connection and decay parameters can thus be modified over time as required to keep the number of edges in the graph within desired bounds.

A user (or a catalytic agent as described below) can optionally assign different weights to links based on different commonalities, e.g. attack type might be weighted more heavily than location. Such weightings could be taken into account in determination of edge strength and thus, when used, in the operation of the connection and/or decay parameters. That is, instead of simply specifying a minimum number of links between agents required for a corresponding edge to form, the connection parameter could specify a minimum aggregate link weight required for a corresponding edge to form. Similarly, instead of simply specifying a minimum number of links between agents required for a corresponding edge to persist, the decay parameter could specify a minimum aggregate link weight required for a corresponding edge to persist.

When used together, the connection and decay parameters can work in concert to keep the number of edges in the knowledge graph at a manageable level, avoiding saturation and over-extension of resources. One or both of them can therefore be configured in dependence on compute/electrical power and memory availability.

The use of connection and decay parameters together, especially when both are configured to have high values, can lead to formation of swarms, flocks, or fully emergent patterns in the dynamic knowledge graph. In this way, new patterns can be discovered, and an ongoing exploration of the knowledge space is achieved.

Figure 3 illustrates an example of a mechanism by which an agent can generate a new edge by messaging one or more other agents to indicate a change in the metadata associated with the node with which it is associated. In this example nodes represent threat actors as described above. A node associated with an agent 310 has pre-existing edge connections with nodes associated with agents 320 and 330. When the agent 310 becomes aware of a new threat (i.e. when its node's metadata is updated to incorporate data relating to the new threat) it broadcasts this knowledge to the agents it is connected to, i.e. agents 320 and 330, including the location the new threat was identified in (Paris). Agent 330 has an interest in EU threats of this type so broadcasts its interest to agent 320. Agent 320 responds via a message with specific knowledge it has on responses to this threat type in the target location. This creates a new edge in the knowledge graph between the nodes associated with agents 320 and 330, indicating they have relevant knowledge of potential future value to one another.

Forming edges in response to communication between agents significantly reduces the resources (time, compute power etc.) required to update the knowledge graph versus pairwise matching of metadata between all nodes.

In addition to agents associated with nodes, other agent types can be included in the dynamic knowledge graph, for example in response to a user request. Such additional agents can have different functions. Some may be configured to act as routers to process messages more efficiently. Others may aggregate multiple topics, in order to create a taxonomy of data. Catalytic agents can act as bridging nodes, with specific goals to link any isolated nodes, to maintain graph connectivity. For example, groups of agents interested in data on respective topics may form silos; catalytic agents can connect those groups together to ensure knowledge is shared between them. Catalytic agents can also reinforce existing links between agents, for example based on specific topics. This could for example be achieved by moderation of the connection and/or decay parameters. In this way, 'knowledge threads' can be generated, which can be visually highlighted in an output GUI for a user.

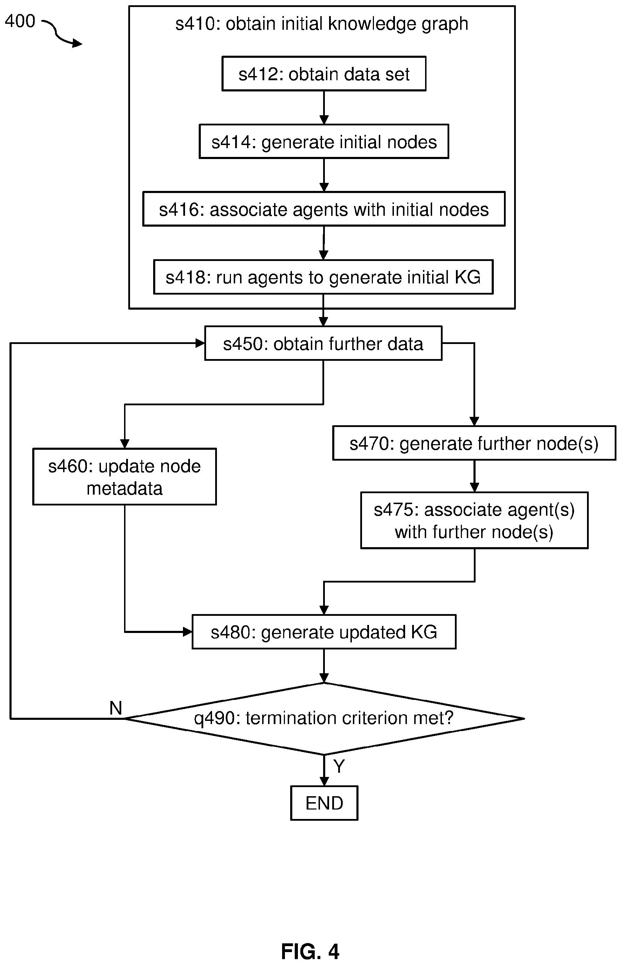

Figure 4 is a flowchart illustrating an example computer-implemented method 400 of updating a dynamic knowledge graph.

At step s410, an initial knowledge graph is obtained. Such an initial knowledge graph can be generated by an external system and provided to the system performing the method 400, or can be generated by that system, for example as indicated at steps s412 to s418. At step s412 a data set is obtained. This can for example be via ingest of one or more data feeds as described in relation to Figure 2 above. The computer system performing the method 400 can passively receive the data in the data set, actively retrieve it from one or more external storage locations, or generate it itself. An initial plurality of nodes representative of the data set are then generated at step s414, each node having metadata associated therewith. At step s416 an agent is associated with each of the initial plurality of nodes, each such agent being configured to automatically establish one or more links between the node with which that agent is associated and one or more other nodes. Then at step s418 the agents are run to generate an initial knowledge graph comprising the initial plurality of nodes interlinked by an initial set of edges. Alternatively, if agents are not used then steps s416 and s418 can be replaced with a pairwise node metadata matching process, or with nodes being connected to one another at random.

Further data is obtained at step s450, for example in the same way the data set was obtained at step s412. In response to this, the metadata associated with one or more of the initial plurality of nodes in the initial knowledge graph may be updated based on the further data at step s460. Alternatively or additionally, one or more further nodes are generated based on the further data at steo s470, each further node having metadata associated therewith, and an agent is optionally associated with each of the further nodes at step s475, each such agent being configured to automatically establish one or more links between the node with which that agent is associated and one or more other nodes.

An updated knowledge graph comprising an updated set of edges dependent on the metadata associated with the nodes is then generated at step s480. Where agents are used, this can be done by running the agents.

At query q490 it is determined whether a termination criterion is met. This could for example be one or more of:
- a predetermined maximum number of edges per node has been reached for one or more nodes;
- no further nodes with metadata of interest can be located;
- one or more agents have run out of virtual resources, e.g., virtual credit exchanged to add edges; and
- a user has deleted a topic of interest.

If the termination criterion is met then the process ends, optionally with causing a user interface device to produce a user alert. If not, the flow loops back to step s450.

Step s480 can comprise one or more of the agents messaging one or more other of the agents to indicate a change in the metadata associated with the node with which it is associated. This can for example be an addition to, removal from or other edit of existing metadata associated with an existing node, or the association of metadata with a newly generated node.

A propensity of each agent to automatically establish a link with another agent in steps s418 and s480 can depend on a configurable connection parameter. The connection parameter's value can optionally depend on the metadata associated with the respective nodes terminating the link.

A propensity of each agent to automatically dissolve a link with another agent in steps s418 and s480 can depend on a configurable decay parameter. The decay parameter's value can optionally depend on the metadata associated with the respective nodes terminating the link.

One or more additional catalytic agents configured to establish additional links between nodes and/or dissolve links between nodes in dependence on the metadata associated with those nodes can be introduced, for example in response to user input.

Step s480 can be performed such that a net number of edges formed exceeds a number of further nodes added in step s470. This can for example be achieved via moderation of one or more of: a connection parameter, a decay parameter, and a catalytic agent operation.

Each of the agents associated with the initial plurality of nodes can be configured with an initial goal to randomly form a link between its associated node and another node in step s418. This can for example provide a starting point for messaging between agents as described in relation to Figure 3 above.

Step s418 can further comprise causing the initial knowledge graph to be displayed on a user interface device. Step s480 can further comprise causing the updated knowledge graph to be displayed on a user interface device. These user interface devices can be the same or different, for example user interface devices associated with multiple devices of the same user (e.g. a personal computer and a smartphone), or user interface devices associated with devices of different users.

Steps s414, s418, s470 and s480 can be performed in dependence on a configurable knowledge graph scale parameter which limits the total number of nodes which can be present in the initial knowledge graph and the updated knowledge graph to ensure the dynamic knowledge graph does not grow unmanageably large.

The data set and further data can both comprise text. Steps s414 and s470 can comprise generating nodes and associated metadata using NLP.

Steps s414 and s470 can comprise generating nodes using vector embedding.

Any agents can for example be script-based to keep them lightweight.

In steps s418 and s480, the agents can run in interpreted mode to reduce computational load.

In steps s418 and s480, the agents can be run in accordance with user input to allow users to specify preferences for how the dynamic knowledge graph should be generated and updated.

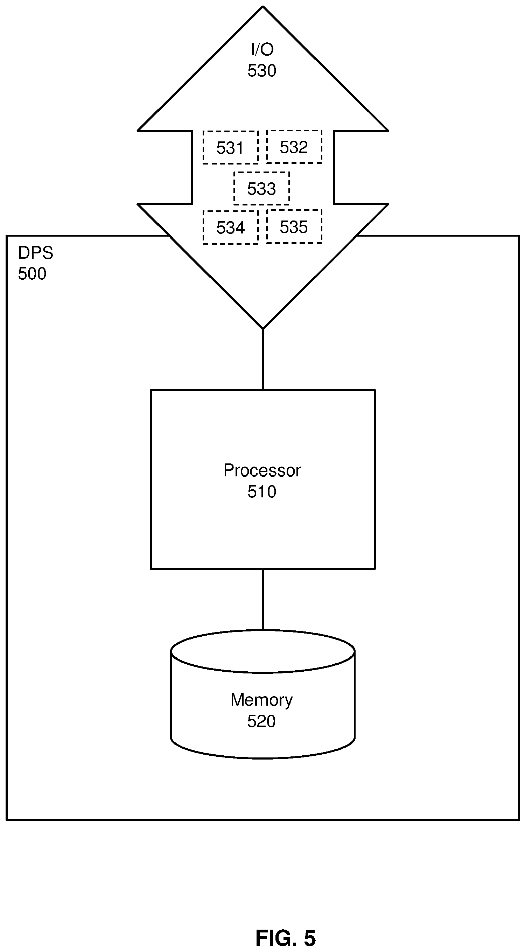

Figure 5 schematically illustrates an example data processing system (DPS) 500 capable of performing any of the methods described above, including the method 400 of Figure 4. It comprises a processor 510 operably coupled to both a memory 520 and an interface (I/O) 530.

The memory 520 can optionally comprise computer program instructions which, when the program is executed by the processor 510, cause the data processing system 500 to carry out any of the methods described above. Alternatively or additionally, the interface 530 can optionally comprise one or both of a physical interface 531 configured to receive a data carrier having such instructions stored thereon and a receiver 532 configured to receive a data carrier signal carrying such instructions.

The receiver 532, when present, can be configured to receive messages. It can comprise one or more wireless receiver modules and/or one or more wired receiver modules. The interface 530 can optionally comprise a transmitter 533 configured to transmit messages. The transmitter 533, when present, can comprise one or more wireless transmitter modules and/or one or more wired transmitter modules.

The interface 530 can optionally further comprise one or more user input devices 534 such as keyboards, mice, and microphones which can for example be used to obtain user input, e.g. of user-configurable parameters. The interface 530 can optionally further comprise one or more user output devices 535 such as displays, and speakers which can for example be used to output information to a user, e.g. to display a mind map or sound an alert that a termination criterion has been met. In some cases a single user interface device, such as a touchscreen, can perform the functionality of both a user input device 534 and a user output device 535.

In some implementations, the methods described above can be performed by a data processing system in the form of a distributed computing system comprising multiple computing devices in communication with one another. For example, user input could be obtained from one or more user devices (e.g. a personal computer, PC), the method could be orchestrated by a dedicated server, one or more agents could run on a first cloud server, one or more other agents could run on a second cloud server, and user output could be provided on the one or more user devices from which user input was taken, or one or more other user devices (e.g. a smartphone). Each computing device of the distributed data processing system could comprise some or all of the components of DPS 500. For example, all of the computing devices could comprise their own memory, processor, receiver and transceiver while only the user devices comprise user input and output devices.

### INTERPRETATION NOTES

The preceding description is presented to enable any person skilled in the art to make and use the system and/or perform the method of the invention, and is provided in the context of a particular application. Various modifications to the disclosed examples will be readily apparent to those skilled in the art. It is intended that the specification be considered as exemplary only.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

## Claims

1. A computer system for dynamically updating a knowledge graph comprising a plurality of nodes interlinked by edges, each of the plurality of nodes having metadata associated therewith, an initial form of the knowledge graph being based on an initial data set, the system comprising:
an ingest layer configured to obtain further data; and
an update module configured to:
I-a. update the metadata associated with one or more of the plurality of nodes in the knowledge graph based on the further data, and/or
I-b. generate one or more further nodes based on the further data, each further node having metadata associated therewith; then
II. generate an updated knowledge graph comprising an updated set of edges by forming and/or dissolving links between nodes in dependence on the metadata associated with the nodes;
wherein the ingest layer and update module are configured to iteratively repeat respectively obtaining further data and performing steps I-a to II until a termination criterion is met.

2. A computer-implemented method of dynamically updating a knowledge graph, the method comprising:
i. obtaining an initial knowledge graph based on an initial data set, the initial knowledge graph comprising an initial plurality of nodes interlinked by an initial set of edges, each of the initial plurality of nodes having metadata associated therewith;
ii. obtaining further data;
iii.
a. updating the metadata associated with one or more of the plurality of nodes in the knowledge graph based on the further data, and/or
b. generating one or more further nodes based on the further data, each further node having metadata associated therewith;
iv. subsequently generating an updated knowledge graph comprising an updated set of edges using a module configured to form and dissolve links between nodes in dependence on the metadata associated with the nodes; and viii. iteratively repeating steps ii to iv until a termination criterion is met.

3. The computer-implemented method of claim 2, wherein a propensity of the module to form links between nodes in step iv depends on a configurable connection parameter.

4. The computer-implemented method of any of claims 2 to 3, wherein a propensity of the module to dissolve links between nodes in step iv depends on a configurable decay parameter.

5. The computer-implemented method of any of claims 2 to 4, wherein step iv is performed such that a net number of edges formed exceeds a number of further nodes added in step iii.b.

6. The computer-implemented method of any of claims 2 to 5, wherein the module of step iv is configured to form and dissolve links between nodes in dependence on pairwise matching of metadata.

7. The computer-implemented method of any of claims 2 to 6, further comprising, in response to the termination criterion being met:
ix. causing a user interface device to produce a user alert.

8. The computer-implemented method of any of claims 2 to 7, wherein:
step i further comprises causing the initial knowledge graph to be displayed on a user interface device; and
step iv further comprises causing the updated knowledge graph to be displayed on a user interface device.

9. The computer-implemented method of any of claims 2 to 8, wherein:
step i further comprises associating an agent with each of the initial plurality of nodes, each such agent being configured to automatically establish one or more links between the node with which that agent is associated and one or more other nodes, the initial knowledge graph being obtained by running the agents;
step iii.b. further comprises associating an agent with each of the further nodes, each such agent being configured to automatically establish one or more links between the node with which that agent is associated and one or more other nodes; and
step iv is performed by running the agents.

10. The computer-implemented method of claim 9, wherein step iv comprises one or more of the agents messaging one or more other of the agents to indicate a change in the metadata associated with the node with which it is associated.

11. The computer-implemented method of any of claims 2 to 10, further comprising introducing one or more catalytic agents configured to establish additional links between nodes and/or dissolve links between nodes in dependence on the metadata associated with those nodes.

12. A computer-implemented method of improving the security of a computer network comprising:
performing the method of any of claims 2 to 11, wherein the data set and the further data relate to threats to the computer network;
predicting a future threat to the computer network based on the updated knowledge graph; and
causing implementation of one or more security measures in the computer network to thwart the predicted future threat.

13. A data processing system configured to perform the method of any of claims 2 to 12.

14. A computer program comprising instructions which, when the program is executed by a computer, cause the computer to carry out the method of any of claims 2 to 12.

15. A computer-readable data carrier having stored thereon the computer program of claim 14, or a data carrier signal carrying the computer program of claim 14.
